# EUROPÄISCHE PATENTSCHRIFT

(11) **EP 1 313 299 B1**
(45) Veröffentlichungstag und Bekanntmachung des Hinweises auf die Patenterteilung: **31.03.2004**
(21) Anmeldenummer: 03003960.6
(22) Anmeldetag: 28.08.1997
(51) Int. Cl.: H04M 3/50, H04M 3/20, H04M 3/22

(54) **Verfahren zur indirekten Übermittlung von Nachrichten in Daten- und/oder Kommunikationsnetzen**
Method for indirect transmission of information in data and/or communication networks
Méthode pour la transmission indirecte d'informations dans des réseaux de données et/ou de communication

(30) Priorität: 23.09.1996 DE 19638970
(43) Veröffentlichungstag der Anmeldung: 21.05.2003
(62) Teilanmeldung aus: 97941842.3
(73) Patentinhaber: SIEMENS AKTIENGESELLSCHAFT, 80333 München (DE)
(72) Erfinder: Gundlach, Michael, Dr., 81739 München (DE)

(56) Entgegenhaltungen:
- EP-A- 0 655 851
- EP-A- 0 675 625
- US-A- 5 335 266

## Beschreibung

Nationale und internationale Gesetze verlangen von Betreibern eines öffentlichen (und in Zukunft voraussichtlich auch eines privaten) Netzes, daß technische Vorkehrungen getroffen werden, die die Überwachung des Fernmeldeverkehrs durch sogenannte Bedarfsträger (Polizei, Nachrichtendienste, etc.) im gesetzlich vorgesehenen Rahmen ermöglichen. Bei klassischen Telefondiensten im Festnetz ist dies in der lokalen Vermittlungsstelle des zu überwachenden Teilnehmers durch Kennzeichnung des entsprechenden Teilnehmerdatensatzes und Einrichtung einer Art von Konferenzschaltung zum überwachenden Bedarfsträger (Überwachungsbedarfsträger) relativ einfach möglich.

Für Store and Forward Systeme, wie z.B. Voice Mail, kommt eine spezifische Anforderung hinzu: Sowohl beim Beschreiben bzw. Besprechen der (Voice) Mailbox als auch beim Retrieval bzw. Abhören sollte die Möglichkeit zur Überwachung durch die Bedarfsträger gewährleistet sein. Dies betrifft sowohl den Fall, daß der zu überwachende Teilnehmer das Store and Forward System benutzt, als auch den Fall, daß dessen Kommunikationspartner (der nicht notwendig ein zu überwachender Teilnehmer sein muß) ein solches System benutzt. Neben der mit Hilfe des Store and Forward Systems (indirekt) übermittelten Nachricht selbst sollen auch Zugriffsdaten festgestellt und dem Bedarfsträger übertragen bzw. gemeldet werden.

Der Erfindung liegt daher die Aufgabe zugrunde, eine technische Lehre anzugeben, mit der die gesetzlichen Anforderungen auch im Falle von Store and Forward Systemen erfüllt werden können. Diese Aufgabe wird mit Hilfe eines Verfahrens zur indirekten Übermittlung von Nachrichten in Daten- und/oder Kommunikationsnetzen mit Merkmalen nach Anspruch 1 gelöst. Vorteilhafte Weiterbildungen der vorliegenden Erfindung ergeben sich aus den Unteransprüchen.

Gemäß der vorliegenden Erfindung sind in Store and Forward Systemen eine Speicherung von Überwachungsdaten (zu überwachende Teilnehmer, überwachende Bedarfsträger, etc.) und eine Übertragung von Nachrichten und Meldungen an die Bedarfsträger (Polizei, Nachrichtendienste, etc.) vorgesehen. Die Übertragung dieser Nachrichten und Meldungen wird u. a. auch durch Zugriffe auf zu überwachende Nachrichten oder durch Zugriffe auf Nachrichten, die an zu überwachende Teilnehmer adressiert sind, ausgelöst.

Das Store and Forward System kann dabei z.B. innerhalb eines Intelligent Network, aber auch als Service Node oder durch andere Komponenten in einem Daten- oder Kommunikationsnetz realisiert sein. Das Kommunikationsnetz kann Sprache und/oder Daten unterstützen. Die Mailbox braucht nicht einem bestimmten Endgerät zugewiesen zu sein ("Virtual Telephony").

Im folgenden wird die Erfindung mit Hilfe von Figuren und anhand bevorzugter Ausführungsbeispiele näher beschrieben.

Figur 1 zeigt schematisch ein typisches Szenario der indirekten Übermittlung von Nachrichten in Daten- und/oder Kommunikationsnetzen.

Figur 2 zeigt schematisch ein typisches Szenario, bei dem die Mailbox eines zu überwachenden Teilnehmers angerufen wird.

Figur 3 zeigt schematisch ein typisches Szenario, bei dem ein zu überwachender Teilnehmer eine Mailbox anruft.

Figur 4 zeigt schematisch die typischen Datenstrukturen in einer Mailbox gemäß einer bevorzugten Ausführungsform der Erfindung.

Figur 5 zeigt schematisch die wichtigsten Architekturmerkmale einer erfindungsgemäßen Mailbox.

Zur Lösung der genannten Aufgabe sieht die Erfindung ein Verfahren zur indirekten Übermittlung von Nachrichten in Daten- und/oder Kommunikationsnetzen, also eine Mailbox, gemäß der Kombination der Merkmale des Anspruchs 1 vor.

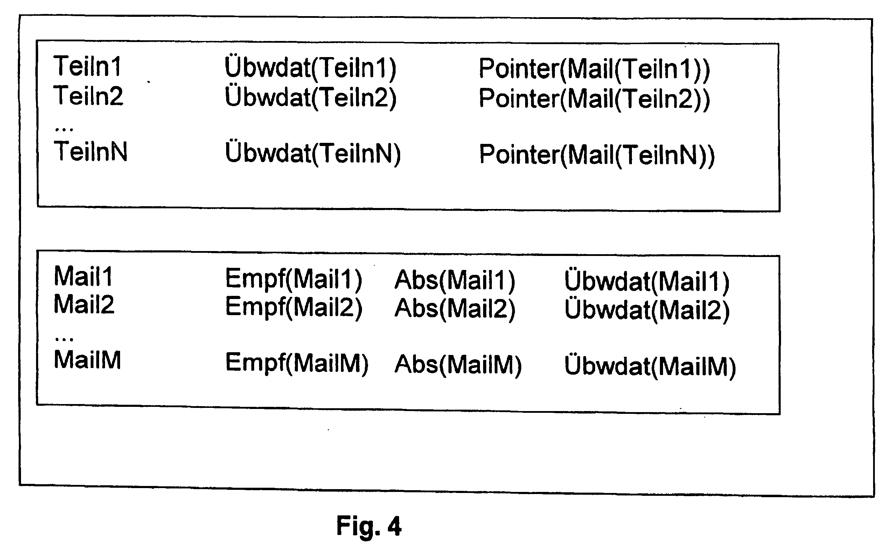

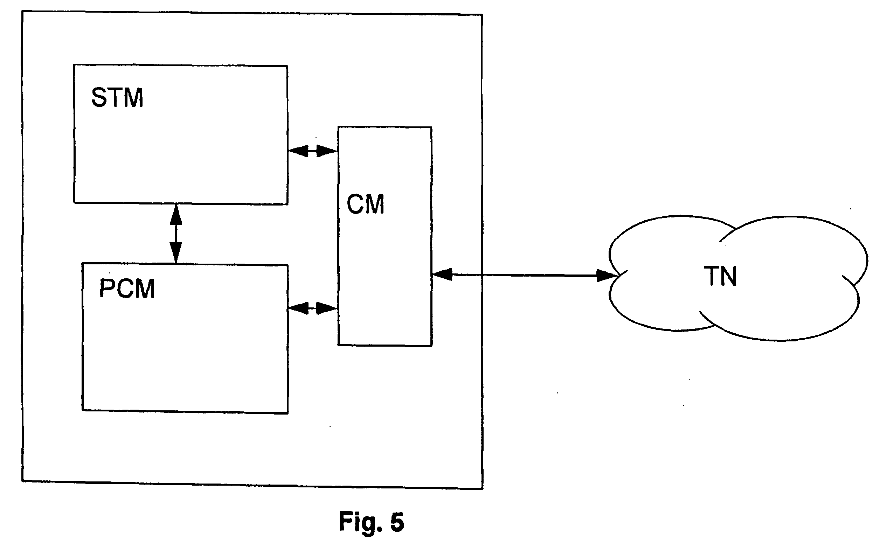

Mailboxen oder dazu gleichwertige Einrichtungen sind dem Fachmann grundsätzlich in unterschiedlichster Art und Ausführung in großer Zahl bekannt. Unter Daten- und/oder Kommunikationsnetzen sind dabei grundsätzlich alle zur Übertragung von Nachrichten unter Einbeziehung einer Mailbox geeigneten Übertragungsvorrichtungen zu verstehen. Für die Erfindung ist es nämlich ganz ohne Belang, welche Inhalte die übertragenen Nachrichten haben. Die Mailbox kann also eine Voice Mailbox, eine Daten-Mailbox oder irgend eine andere Einrichtung zur indirekten Nachrichtenübertragung sein. Wichtig ist nur, daß diese Nachrichten in der Mailbox zusammen mit den Namen und/oder Adressen der Empfänger dieser Nachrichten gespeichert werden (Figur 4). Mittel zur Speicherung (STM) von Nachrichten und Empfängernamen oder Empfängeradressen sind dem Fachmann in unterschiedlichster Art und Ausführung in großer Zahl bekannt (Figur 5). Die Formulierung "zusammen mit" soll hierbei bedeuten, daß es dem Betriebssystem (Betriebssoftware und Hardware, PCM) oder einer dazu gleichwertigen Einrichtung der Mailbox jederzeit möglich sein soll, den oder die vom Absender (Abs(Mail)) vorgesehenen Empfänger (Empf(Mail)) einer Nachricht (Mail) festzustellen, und daß es dem Betriebssystem der Mailbox ebenfalls jederzeit möglich sein soll, zu einem beliebig vorgegebenen Empfängernamen (Teiln) bzw. zu einer beliebig vorgegebenen Empfängeradresse alle Nachrichten aufzufinden (Pointer(Mail(Teiln))), die (möglicherweise unter anderem) an diesen Empfänger adressiert sind. Dabei kann es durchaus sein, daß einzelne oder gar alle Nachrichten öffentlich, also für den Empfang durch beliebige Teilnehmer bestimmt sind. Solche öffentlichen Nachrichten könnten entweder ohne Nennung eines Empfängers oder mit einem entsprechenden Kennzeichen in der Mailbox gespeichert sein.

Ferner ist eine Prüfung (PCM) des Namens und/oder der Adresse eines auf die Einrichtung zugreifenden Teilnehmers vorgesehen. Die Mittel (PCM) zur Prüfung, im allgemeinen geeignete Softwaremodule, die auf geeigneten Prozessoren (PCM) ablaufen, sind dem Fachmann in unterschiedlichster Art und Ausführung in großer Zahl bekannt. Hierdurch soll zunächst lediglich die Identität zugreifender Teilnehmer festgestellt werden. Bei einer bevorzugten Ausführungsform der vorliegenden Erfindung soll ferner eine Kontrolle von Zugriffen unterschiedlicher Art, also z.B. Abhören, Löschen, Ändern, Downloaden, etc., in Abhängigkeit von den jeweiligen Zugriffsrechten der zugreifenden Teilnehmer möglich sein.

Ferner sieht die Erfindung eine Speicherung von Angaben darüber, ob ein Teilnehmer zu überwachen und ggf. von welchem Überwachungsbedarfsträger dieser Teilnehmer zu überwachen ist vor. Diese Speicherung Kann z.B. durch eine Tabelle realisiert werden, die auf einem geeigneten Speichermedium gespeichert ist, und in der ein zu überwachender Teilnehmer entsprechend gekennzeichnet ist. Daneben kann in dieser Tabelle gegebenenfalls z.B. ein Verweis auf eine Speicheradresse enthalten sein, unter welcher die Überwachungsbedarfsträger gespeichert sind, von denen dieser Teilnehmer zu überwachen ist.

Schließlich sieht die vorliegende Erfindung eine Übertragung (CM) einer Nachricht, die an einen als zu überwachen gekennzeichneten Teilnehmer adressiert ist, an einen für diesen Teilnehmer gespeicherten Überwachungsbedarfsträger vor. Diese Übertragung läßt sich am einfachsten durch eine entsprechende Software realisieren, die jede in der Mailbox eintreffende Nachricht daraufhin untersucht, ob diese Nachricht an einen als zu überwachen gekennzeichneten Teilnehmer adressiert ist, und welche eine Übertragung dieser Nachricht im Falle eines positiven Ergebnisses dieser Prüfung an einen für diesen Teilnehmer gespeicherten Überwachungsbedarfsträger oder an mehrere für diesen Teilnehmer gespeicherte Überwachungsbedarfsträger vornimmt. Die genannte Prüfung kann einfach durch eine entsprechende Suche in einer Teilnehmertabelle nach allen im Adressfeld der Nachricht aufgeführten Adressaten erfolgen.

Gemäß einer vorteilhaften Weiterbildung der Erfindung sind eine Speicherung von Angaben darüber, ob und ggf. von welchem Überwachungsbedarfsträger eine gespeicherte Nachricht zu überwachen ist und eine Übertragung einer Meldung über einen Zugriff auf eine als zu überwachen gekennzeichnete Nachricht an einen für diese Nachricht gespeicherten Überwachungsbedarfsträger vorgesehen. Diese Maßnahmen können z.B. durch eine Tabelle realisiert werden, in der eine zu überwachende Nachricht als solche gekennzeichnet ist, und in der ein Verweis auf eine Speicheradresse enthalten ist, unter der der oder die Überwachungsbedarfsträger einer Nachricht gespeichert ist bzw. sind. Wird auf eine solche Nachricht zugegriffen, wird eine entsprechende Meldung an den bzw. die Überwachungsbedarfsträger übertragen. Dies geschieht am einfachsten mit Hilfe einer hierfür vorgesehen Software.

Gemäß einer weiteren vorteilhaften Weiterbildung der Erfindung ist eine Übertragung einer Meldung an einen Überwachungsbedarfsträger vorgesehen, der für einen ersten Teilnehmer gespeichert ist, sobald ein zweiter Teilnehmer auf eine in der Einrichtung gespeicherte Nachricht zugreift, die an den ersten Teilnehmer adressiert ist, falls dieser als zu überwachen gekennzeichnet ist.

Eine weitere vorteilhafte Weiterbildung der Erfindung sieht ein Verfahren der bereits beschriebenen Art vor, bei dem die an einen Überwachungsbedarfsträger übertragenen Meldungen Angaben über den Absender und/oder die Empfänger einer Nachricht und/oder den Zeitpunkt und/oder die Art des die Übertragung der Meldung auslösenden Zugriffs auf diese Nachricht enthalten.

Zur näheren Erläuterung der Erfindung anhand von Fallbeispielen wird der besseren Verständlichkeit wegen im folgenden eine Voice Mailbox betrachtet. Die Erfindung gilt jedoch entsprechend auch für andere Arten von Mailboxen und in anderen Netzen als dem Telefonnetz. Insbesondere die in den Figuren dargestellte Anbindung der (Voice-) Mailbox an eine Transit-Vermittlungsstelle ist nur als Beispiel anzusehen.

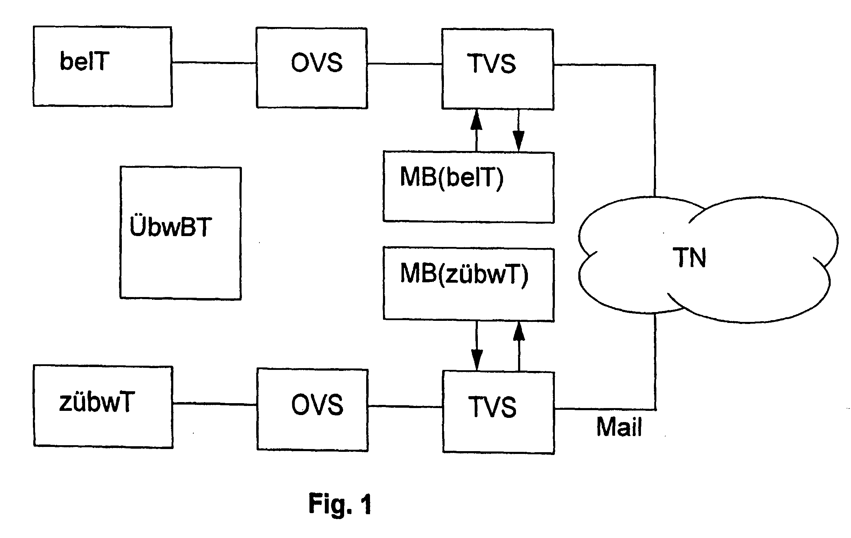

Figur 1 zeigt die allgemeine Situation, die der Erfindung zugrundeliegt. Ein Daten- und/oder Kommunikationsnetz (Transitnetz, TN) dient zur Übertragung von Nachrichten zwischen Teilnehmern, unter denen zu überwachende (zübwT) und nicht zu überwachende (beliebige, belT) Teilnehmer sind. Wenigstens ein Teilnehmer hat eine Mailbox, d.h. ist registrierter Benutzer einer Mailbox. Da jede Mailbox mehrere registrierte Benutzer haben kann (und im allgemeinen auch hat), kann es durchaus sein, daß zwei kommunizierende Teilnehmer die gleiche Mailbox im physikalischen Sinne benutzen, wenngleich ihre Mailboxen logisch natürlich verschieden sind (unterschiedliche Teilnehmerdatensätze, engl. user accounts).

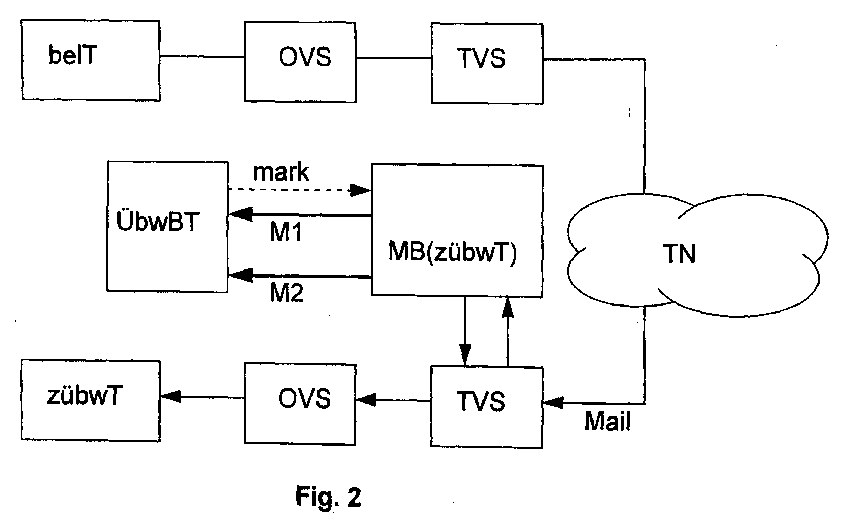

Zunächst sei ein Anwendungsfall betrachtet, bei dem der zu überwachende Teilnehmer (zübwT) registrierter Benutzer einer Voice Mailbox (MB(zübwT)) ist und einen indirekt übermittelten Anruf (Mail, d.h. in diesem Fall eine Voice Mail) von einem beliebigen (d.h. nicht notwendig zu überwachendem) Teilnehmer (belT) erhält. Dieser Fall wird durch die schematische Darstellung der Figur 2 verdeutlicht.

Auf Antrag eines Überwachungsbedarfsträgers (ÜbwBT) wird die Rufnummer, die Identity oder allgemein der Teilnehmerdatensatz des zübwT gekennzeichnet (mark). Dies geschieht in der Regel unter Mitwirkung eines Service Providers durch Eintrag eines entsprechenden Vermerks in den Teilnehmerdatensatz des zübwT. Die Kennzeichnung kann Informationen darüber enthalten, an welche(n) Bedarfsträger welche Daten (z.B. nur Uhrzeit, Dauer und Quelle der Anrufe, mit oder ohne Inhalt) in welchem Zeitraum übertragen werden sollen. Anrufe an die Mailbox des zu überwachenden Teilnehmers werden (vorzugsweise sofort) online (entsprechend den Informationen der Kennzeichnung) an den oder die Bedarfsträger übermittelt (M1). Wenn eine Nachricht gelesen (oder abgehört) wird, wird z.B. die Zeit, die Dauer, der Ort und die Art des Zugriffs an den oder die Bedarfsträger übermittelt (M2).

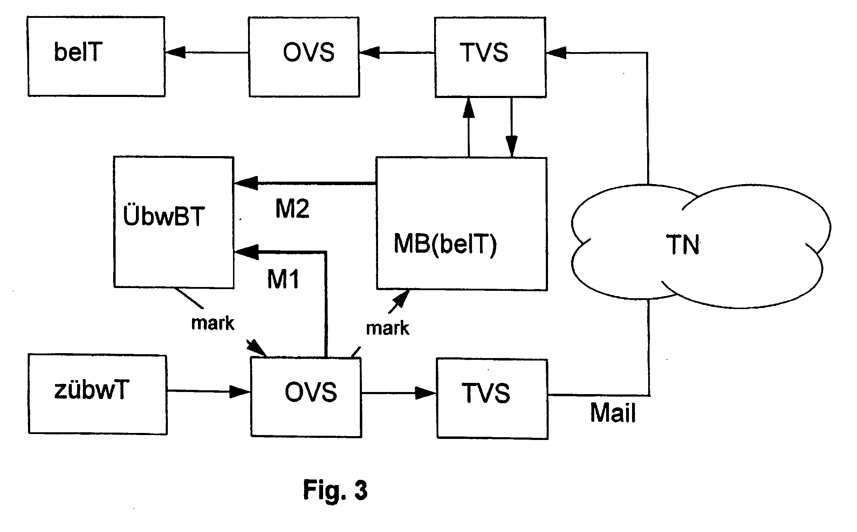

In einem zweiten Anwendungsfall, der durch Figur 3 verdeutlicht wird, ruft ein zu überwachender Teilnehmer (zübwT) die Mailbox (MB(belT)) eines beliebigen anderen Teilnehmers (belT) an. In diesem Fall wird die Rufnummer des zu überwachenden Teilnehmers in seinem lokalen System (d.h. z.B. in seiner Orts-Vermittlungsstelle OVS, falls er ein normaler Telefonteilnehmer ist) gekennzeichnet. Die Kennzeichnung kann Informationen darüber enthalten, an welche(n) Bedarfsträger welche Daten in welchem Zeitraum übertragen werden sollen. Die Orts-Vermittlungsstelle oder allgemeiner das System, in dem der zu überwachende Teilnehmer (zübwT) gekennzeichnet ist, erkennt, daß es sich um eine Store and Forward Mail handelt. Dies geschieht beispielsweise anhand der gewählten Rufnummer (allgemein: der Adresse der Nachricht) oder anhand einer charakteristischen Signalisierungsinformation von der angewählten Mailbox. Diese Information kann gegebenenfalls angefordert werden.

Die Orts-Vermittlungsstelle (allgemein: das System) des zu überwachenden Teilnehmers kennzeichnet die Mail (unsichtbar für Dritte) unter Angabe des überwachenden Bedarfsträgers und gegebenenfalls weiterer Informationen, entsprechend der Kennzeichnung im System (OVS). Gleichzeitig wird die Nachricht entsprechend der Kennzeichnung im System an den Überwachungsbedarfsträger übermittelt. Wenn die Nachricht von dem eigentlichen Empfänger (d.h. von dem beliebigen Teilnehmer, and den sie eigentlich adressiert wurde) gelesen wird, wird eine Meldung mit Angabe von Zeit, Dauer, Ort und Art des Zugriffs an den Überwachungsbedarfsträger übermittelt. Nachrichten in der Mailbox des Empfängers, die nicht von zu überwachenden Absendern stammen, oder Nachrichten, die nicht als zu überwachen gekennzeichnet sind, sind für den Überwachungsbedarfsträger nicht sichtbar.

Zur Umsetzung dieser Abläufe ist eine Mailbox erforderlich, die die genannten Abläufe in geeigneter Weise unterstützt. In der Mailbox muß demnach ein Kennzeichen gespeichert und verwaltet (d.h. z.B. durch eine entsprechende Software informationstechnisch behandelt) werden, das anzeigt, ob und von wem ein Teilnehmer zu überwachen ist (Übwdat(Teiln)), und ob und von wem eine empfangene Mail zu überwachen ist (Übwdat(Mail)). Dazu ist beispielsweise eine Datenstruktur geeignet, die für jeden registrierten Benutzer (Teiln1,...,TeilnN) einen Datensatz in einer Sammlung von Datensätzen vorsieht, wobei in jedem Datensatz die für die Überwachung relevanten Daten (Übwdat(Teiln)) des entsprechenden Teilnehmers und ein Verweis (Pointer(Mail(Teiln))) gespeichert ist, der den Zugriff auf die Nachrichten ermöglicht, in deren Adressfeldern dieser Teilnehmer als Empfänger (Empf(Mail)) oder Absender Abs(Mail)) genannt ist. Daneben ist eine weitere Sammlung von Datensätzen sinnvoll, in der zu jeder in der Mailbox gespeicherten Mail (Mail1,...,MailM) ein Datensatz existiert, in dem die Empfänger (Empf(Mail)), die Absender (Abs(Mail)) und die Überwachungsdaten (Übwdat(Mail)) der entsprechenden Mail gespeichert sind.

Die Betriebssoftware der Mailbox verwaltet und aktualisiert die genannten Datensatzsammlungen. Sie stößt ferner die Prozesse an zur Übertragung
- einer an einen überwachten Teilnehmer gesendeten Mail, gegebenenfalls inkl. Zeit, Dauer und Quelle, an den oder die Überwachungsbedarfsträger, nach Maßgabe der entsprechenden Überwachungsdatenfelder (Übwdat),
- von Zeitpunkt, Ort und Art des Zugriffs auf die Mailbox eines zu überwachenden Teilnehmers (d.h. z.B. auf eine für Ihn gespeicherte Nachricht in einer Mailbox, in der mehrere Benutzer registriert sind), bzw.
- von Zeitpunkt, Art und Ort des Zugriffs auf eine (z.B. durch Eintrag in Übwdat(Mail)) gekennzeichnete Mail in der Mailbox eines beliebigen Teilnehmers an den oder die Bedarfsträger.

Um die Überwachung beliebiger Nachrichten eines zu überwachenden Teilnehmers an beliebige andere Teilnehmer über deren Mailbox zu ermöglichen, muß das lokale System, in dem der zu überwachende Teilnehmer registriert ist, also z.B. seine Orts-Vermittlungsstelle, über Einrichtungen verfügen, die es gestatten,
- den zu überwachenden Teilnehmer dort entsprechend als "zu überwachen" zu kennzeichnen,
- mit seinem Nachrichtenverkehr zusammenhängende Kommunikations- und Verbindungsdaten an einen oder mehrere Bedarfsträger zu übermitteln,
- Informationen über die Art des Ziels von Kommunikationsdaten anzufordern und auszuwerten, insbesondere im Hinblick darauf, ob das Ziel eine Mailbox ist, und
- eine zu überwachende Mail zu kennzeichnen und das Kennzeichen an die Ziel-Mailbox zu übertragen.

Zur Beschreibung der vorliegenden Erfindung wurden die folgenden Abkürzungen verwendet:
- STM: Speichermittel
- PCM: Prozessor, Mittel zur Informationsverarbeitung, Software und Hardware
- CM: Mittel zur Informationsübertragung
- TN: Transitnetzwerk, Daten- und/oder Kommunikationsnetz
- Teiln: Teilnehmername, Teilnehmeridentität, Teilnehmernummer, Teilnehmeradresse, user account name
- Übwdat: Datenfeld in einem Datensatz, daß zur Speicherung von Überwachungskennzeichen und anderen überwachungsrelevanten Daten dient
- Empf: Empfänger-Adresse
- Abs: Absender-Adresse
- Pointer: Verweis auf eine Speicheradresse oder auf mehrere Speicheradressen
- belT: ein beliebiger Teilnehmer
- OVS: ein lokales System, bei dem ein Teilnehmer registriert ist, z.B. eine Orts-Vermittlungsstelle
- TVS: Transit-Vermittlungsstelle
- MB: Mailbox
- ÜbwBT: Überwachungsbedarfsträger
- zübwT: zu überwachender Teilnehmer
- M1, M2: Meldungen oder Nachrichten, die an ÜbwBT übertragen werden
- mark: Markierung einer Nachricht

## Patentansprüche

1. Verfahren zur indirekten Übermittlung von Nachrichten in Daten und/oder Kommunikationsnetzen, bei dem
a) Nachrichten und Empfängernamen oder Empfängeradressen in einer Speichereinrichtung gespeichert werden;
b) der Namen und/oder die Adresse eines auf die Einrichtung zugreifenden Teilnehmers geprüft werden;
c) Angaben darüber, ob ein Teilnehmer zu überwachen ist und im Uberwachungsfall
d) von welchem Überwachungsbedarfsträger dieser Teilnehmer zu überwachen ist, gespeichert werden;
e) eine Nachricht, die an einen als zu überwachen gekennzeichneten Teilnehmer adressiert ist, an einen für diesen Teilnehmer gespeicherten Überwachungsbedarfsträger übertragen wird.

2. Verfahren nach Anspruch 1, bei dem
a) gespeichert wird, ob und ggf. von welchem Überwachungsbedarfsträger eine gespeicherte Nachricht zu überwachen ist;
b) eine Meldung über einen Zugriff auf eine als zu überwachen gekennzeichnete Nachricht an einen für diese Nachricht gespeicherten Überwachungsbedarfsträger übertragen wird.

3. Verfahren nach einem der vorhergehenden Ansprüche,
bei dem eine Meldung an einen Überwachungsbedarfsträger übertragen wird, der für einen ersten Teilnehmer gespeichert ist, sobald ein zweiter Teilnehmer auf eine in der Einrichtung gespeicherte Nachricht zugreift, die an den ersten Teilnehmer adressiert ist, falls dieser als zu überwachen gekennzeichnet ist.

4. Verfahren nach einem der Ansprüche 2 oder 3,
bei dem die an einen Überwachungsbedarfsträger übertragenen Meldungen Angaben über den Absender und/oder die Empfänger einer Nachricht und/oder den Zeitpunkt und/oder die Art des die Übertragung der Meldung auslösenden Zugriffs auf diese Nachricht enthält.

## Claims

1. Method for indirect transmission of messages in data and/or communications networks in which
a) messages and receiver names or receiver addresses are stored in a storage device;
b) the name and/or the address of a subscriber who is accessing the device are checked;
c) details are stored relating to whether a subscriber is to be monitored and, in the event of monitoring,
d) by which monitoring agency the subscriber is to be monitored;
e) a message which is addressed to a subscriber who has been identified as to be monitored is transmitted to a monitoring agency which is stored for this subscriber.

2. Method according to Claim 1, in which
a) information as to whether, and if necessary by which monitoring agency, a stored message is to be monitored is stored;
b) a signal, relating to access to a message which has been identified as to be monitored, is transmitted to a monitoring agency which is stored for this message.

3. Method according to one of the preceding claims, in which a signal is transmitted to a monitoring agency which is stored for a first subscriber, as soon as a second subscriber accesses a message which is stored in the device and is addressed to the first subscriber, if said subscriber is identified as to be monitored.

4. Method according to one of Claims 2 or 3, in which the signals transmitted to a monitoring agency contain details about the sender and/or the receivers of a message, and/or about the time and/or nature of the access to this message initiating the transmission of the signal.

## Revendications

1. Procédé pour la transmission indirecte d'informations dans des réseaux de données et/ou de communication, dans lequel
a) des messages et des noms de destinataires ou des adresses de destinataires sont enregistrés dans un dispositif de mémoire;
b) le nom et/ou l'adresse d'un abonné opérant un accès au dispositif sont contrôlés;
c) sont enregistrées des indications précisant s'il y a lieu de surveiller un abonné et, en cas de surveillance,
d) par quel porteur de besoins de surveillance ledit abonné doit être surveillé;
e) un message adressé à un abonné marqué comme étant à surveiller est transmis à un porteur de besoins de surveillance enregistré pour ledit abonné.

2. Procédé selon la revendication 1, dans lequel
a) il est enregistré si et, le cas échéant, par quel porteur de besoins de surveillance il y a lieu de surveiller un message enregistré;
b) une signalisation d'un accès à un message marqué comme étant à surveiller est transmise à un porteur de besoins de surveillance enregistré pour ledit message.

3. Procédé selon l'une des revendications précédentes, dans lequel une signalisation est transmise à un porteur de besoins de surveillance enregistré pour un premier abonné dès qu'un deuxième abonné opère un accès à un message enregistré dans le dispositif et adressé au premier abonné dans la mesure où celui-ci est marqué comme étant à surveiller.

4. Procédé selon l'une des revendications 2 ou 3, dans lequel les signalisations transmises à un porteur de besoins de surveillance contiennent des indications sur l'émetteur et/ou le destinataire d'un message et/ou l'instant et/ou la nature de l'accès audit message qui déclenche la transmission de la signalisation.
